## Europäisches Patentamt
## European Patent Office
## Office européen des brevets

(11) Veröffentlichungsnummer: **0 014 375**
A2

(12) **EUROPÄISCHE PATENTANMELDUNG**

(21) Anmeldenummer: 80100317.9

(22) Anmeldetag: 22.01.80

(51) Int. Cl.³: **G 01 J 3/42**

(30) Priorität: 12.02.79 DE 2905230

(43) Veröffentlichungstag der Anmeldung:
20.08.80 Patentblatt 80/17

(84) Benannte Vertragsstaaten:
AT BE CH FR GB NL SE

(71) Anmelder: SIEMENS AKTIENGESELLSCHAFT Berlin
und München
Postfach 22 02 61
D-8000 München 22(DE)

(72) Erfinder: De Steur, Hubert
Spoorwegstraat 11
B-9810 Drongen(BE)

(72) Erfinder: Vandenbossche, Chris, Dipl.-Chem.
Gebuurtestraat 8
B-9710 Zwijnaarde(BE)

(72) Erfinder: Heyneman, Guido
8-Meilaan 48
B-8300 Knokke(BE)

(54) Zweistrahl-Wechsellicht-Kolorimeter.

(57) Die Erfindung betrifft ein Zweistrahl-Wechsellicht-Kolorimeter, bei dem der von einer Beleuchtungsoptik (2) kommende Meßstrahl (8) mit Hilfe eines Steuerorgans und feststehender Spiegel (10, 14) im Wechsel auf eine erste Meßküvette (9) und darauffolgend durch eine zweite Meßküvette (15) auf ein gemeinsames Fotoelement (11) abgelenkt wird, welches mit einer Meß- und Auswerteschaltung (16) in Verbindung steht. Ein besonders einfacher und störunanfälliger Aufbau wird dadurch erreicht, daß das Steuerorgan ein in den Strahlengang des Meßstrahls (8) einschwenkbarer Spiegel (10) ist, der den von der Lichtquelle (3) erzeugten Meßstrahl um 90° ablenkt.

FIG1

SIEMENS AKTIENGESELLSCHAFT          Unser Zeichen
Berlin und München                  VPA 79 P 7 9 0 3

Zweistrahl-Wechsellicht-Kolorimeter

Die Erfindung bezieht sich auf ein Zweistrahl-Wechsellicht-Kolorimeter, bestehend aus einer Beleuchtungsoptik und einem Steuerorgan, welches mit Hilfe zweier feststehender Umlenkspiegel den von einer Lichtquelle erzeugten Meßstrahl im Wechsel durch eine erste und darauffolgend durch eine zweite Meßküvette auf ein gemeinsames Fotoelement ablenkt, sowie einer mit dem Fotoelement verbundenen Meß- und Auswerteschaltung.

Der Vorteil derartiger Zweistrahl-Wechsellicht-Kolorimeter besteht gegenüber den anderen bekannten Einstrahl- und Zweistrahl-Kolorimetern in der Verwendung eines einzigen Strahlungsempfängers in Form eines Fotoelementes für das Meß- und Vergleichsstrahlsignal. Durch die Verwendung von zwei die Objektflüssigkeit führenden Meßküvetten, von denen eine eine vergleichsweise hohe Dicke und die andere nur die halbe Dicke aufweist, wird es ermöglicht, durch Verschmutzungen der Küvettenfenster her-

Hs 1 Kow / 7.2.1979

79 P 7 9 0 3

vorgerufene Meßwertverfälschungen zu kompensieren. Durch die Verwendung von Meßküvetten von gleicher Schichtdicke, von denen die eine die Objektflüssigkeit und die andere eine Blindwertflüssigkeit enthalten, wird es ermöglicht, Blindwerte zu kompensieren. Durch Verarbeitung der elektrischen Meßsignale -nach dem fotometrischen Absorptionsgesetz- wird es ermöglicht, die Konzentration der zu messenden Komponente in der Objektflüssigkeit zu ermitteln. Die bekannten Zweistrahl-Wechsellicht-Kolorimeter besitzen ein Steuerorgan, welches den von einer Beleuchtungsoptik erzeugten Meßstrahl im Wechseltakt durch eine erste und darauffolgend durch eine zweite Meßküvette lenkt. Hierzu wird meist eine umlaufende Blende (Chopper-Scheibe) verwendet, wobei mittels eines Spiegelsystems der von der Beleuchtungsoptik erzeugte Meßstrahl auf die Küvettenfenster der beiden Meßküvetten gerichtet wird. Das vom einzigen Fotowiderstand bzw. Fotoelement gelieferte Meßsignal gelangt in eine Meßwertschaltung, wobei die Ausgangsspannung der Meßwertschaltung ein Maß für die Konzentration der Objektflüssigkeit ist.

Ein Zweistrahl-Wechsellicht-Kolorimeter dieser Art ist durch die DE-OS 25 36 188 bekannt geworden, bei dem im Wege des von der Beleuchtungsoptik kommenden Meßstrahls im Winkel von 45° ein halbdurchlässiger Spiegel angeordnet ist, wobei der vom halbdurchlässigen Spiegel reflektierte Teil des Meßstrahles gegenüber dem durchgelassenen Teil des Meßstrahls um 90° abgelenkt wird. Durch je einen zusätzlichen Spiegel im Strahlengang der beiden Teilmeßstrahlen werden diese auf das gemeinsame Fotoelement gelenkt. Da beide Teilstrahlen ständig auf das Fotoelement einwirken, ist eine rotierende Blende vorgesehen, die die beiden Strahlen wechselweise zur Wirkung bringt. Des weiteren müssen Synchronisierschalter vorgesehen sein, die in Abhängigkeit von der rotierenden Blendenscheibe gesteuert werden müssen. Mit Hilfe dieser Synchronisierschalter werden die Ausgangssignale der Meßstrahlen auf
entsprechende Analogspeicher gegeben, von welchen sie
der weiteren Auswertung zugeführt werden.

Dieses bekannte Zweistrahl-Wechsellicht-Kolorimeter erfordert einen recht erheblichen Aufwand an Mechanik und
Elektronik, einerseits durch die rotierende Blende und
andererseits durch die Speicherung beider Signale.

Der Erfindung liegt die Aufgabe zugrunde, ein Zweistrahl-Wechsellicht-Kolorimeter zu schaffen, das weniger
aufwendig ist und daher auch weniger störanfällig ist
als die bekannten Kolorimeter. Diese Aufgabe wird gemäß
der Erfindung dadurch erreicht, daß das Steuerorgan ein
in den Strahlengang des Meßstrahls einschwenkbarer Spiegel
ist, der den von der Lichtquelle erzeugten Meßstrahl um
$90^{\circ}$ ablenkt.

Gegenüber den bekannten Zweistrahl-Wechsellicht-Kolorimetern weist der erfindungsgemäße den erheblichen Vorteil
auf, daß keine rotierende Teile verwendet sind, die zwangsläufig der Wartung und Abnützung unterliegen. Ferner wird
gegenüber dem durch die DE-OS 25 36 188 bekannt geworden
Kolorimeter noch der Vorteil erreicht, daß kein halbdurchlässiger Spiegel verwendet zu werden braucht. Da
Spiegel dieser Art den Meßstrahl nicht exakt genau gleich
teilen können, müssen zusätzliche Justiermaßnahmen getroffen werden. Ein besonderer Vorteil gegenüber den bekannten Kolorimetern besteht noch darin, daß bei dem erfindungsgemäßen Zweistrahl-Wechsellicht-Kolorimeter nur
ein Meßwertspeicher gebraucht wird, da weder oszillierende Teile, noch umlaufende Blenden verwendet werden.

In an sich bekannter Weise ist dem Fotoelement ein Strom-

Spannungswandler nachgeschaltet, dessen Ausgang in Abhängigkeit von der Spiegelstellung einmal mittelbar über einen Analogspeicher und einmal unmittelbar auf die Eingänge einer Rechenschaltung schaltbar ist, welche eine der Funktion $k \cdot \log \frac{Um}{Ur}$ entsprechende Ausgangsspannung liefert, wobei k eine Konstante ist und Um und Ur Spannungen bedeuten, die proportional der Intensität der beiden Meßstrahlen Ir und Im sind.

Anhand der Zeichnung, in der ein Ausführungsbeispiel schematisch dargestellt ist, wird die Erfindung näher erläutert. Es zeigen:

Figur 1 den prinzipiellen Aufbau des Zweistrahl-Wechsellicht-Kolorimeters,
Figur 2 das Prinzip der Küvetten-Füllung und
Figur 3 eine Auswerteschaltung im Prinzip.

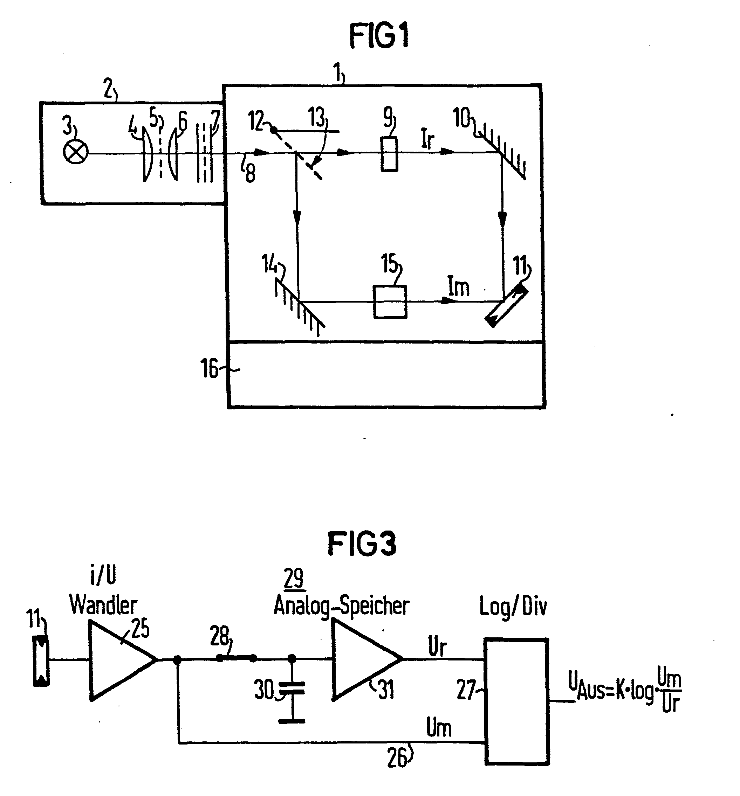

Gemäß Figur 1 besteht das Zweistrahl-Wechsellicht-Kolorimeter aus einem Gehäuse 1 mit einer in einem Wandungsteil eingesetzten Beleuchtungsoptik 2, welche aus einer Lampe 3, insbesondere einer Halogenlampe, den beiden Linsen 4 und 6, sowie einer Blende 5 und einem Interferenzfilter 7 besteht. Mit 8 ist die optische Achse des Meßstrahls bezeichnet. Der Meßstrahl 8 ist unmittelbar auf eine Meßküvette 9 gerichtet, die er nach entsprechender Absorption als Referenzstrahl Ir verläßt, welcher über einen Umlenkspiegel 10 auf ein Fotoelement 11 geleitet wird.

In der Nähe der optischen Achse 8 des Meßstrahls ist ein um eine Achse 12 schwenkbarer Spiegel 13 angeordnet, der um 45° in die optische Achse 8 des Meßstrahles einschwenkbar ist. Der Meßstrahl erfährt nun eine Ablenkung von 90°, wird über einen weiteren feststehenden Spiegel 14 auf eine Meßküvette 15 mit doppelter Dicke, wie die Meßküvette 9

-5-  79 P 7903

gelenkt und gelangt als Meßstrahl Im ebenfalls auf das gemeinsame Fotoelement 11. In einem abgetrennten Raum 16 ist die Elektronik untergebracht, so daß das Gesamtgerät eine kompakte Einheit bildet, die in einem Analyseautomat relativ leicht untergebracht werden kann.

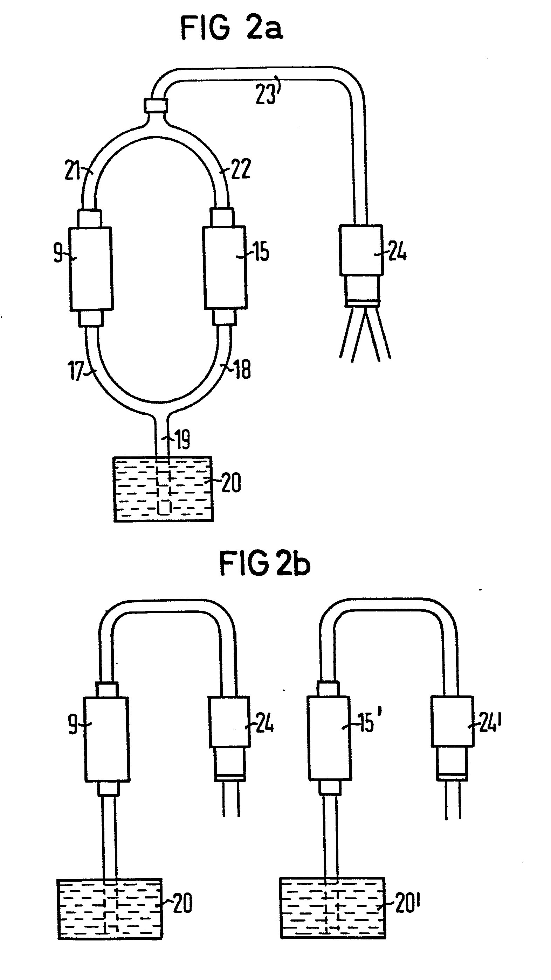

Wie Figur 2a zeigt, stehen die beiden Meßküvetten 9 und 15 über Schlauchleitungen 17 und 18 mit einer gemeinsamen Ansaugleitung 19 in Verbindung, welche in ein Gefäß 20 eintaucht, in welchem sich die zu prüfende Flüssigkeit befindet. Das Gefäß 20 kann ein an sich bekanntes Titriergefäß sein, welches mit einem Rührwerk oder dgl. ausgeführt sein kann. Der obere Teil der beiden Meßküvetten 9 und 15 steht über Verbindungsleitungen 21 und 22 mit einer gemeinsamen Leitung 23 in Verbindung, welche mit einem Saugheber 24, welcher beispielsweise eine Dosierspritze sein kann, in Verbindung. Mit Hilfe des Saughebers 24 wird die Probe dem Gefäß 20 entnommen und in die Küvetten 9 und 15 befördert.

Die beiden Meßküvetten 9 und 15 können aber auch hintereinander geschaltet sein und können im Bedarfsfalle auch kontinuierlich von der Prüfflüssigkeit durchflossen sein.

Wie Figur 2b zeigt, können die Meßküvetten 9 und 15' gleiche Schichtdicke aufweisen, wobei dann die Meßküvette 9 die Meßlösung 20 und die Meßküvette 15' eine Referenzlösung 20' enthält. Für diese ist dann eine weitere Dosierspritze 24' erforderlich.

Figur 3 zeigt die Meß- und Auswerteschaltung. Das Fotoelement 11 steht mit dem Eingang eines Strom-Spannungs-Wandlers 25 in Verbindung. Der Ausgang des Wandlers 25 ist einmal unmittelbar über eine Leitung 26 mit dem einen Eingang einer Rechenschaltung 27 verbunden und zum anderen über ein Schaltelement 28 und einen Analogspeicher 29 mit einem zweiten Eingang der Rechenschaltung 27 verbunden. Der Analogspeicher 29 besteht aus einem Kondensator 30 und einem Verstärker 31 mit hochohmigem Eingang. Der Schalter 28 wird entsprechend der Stellung des Schwenkspiegels 13 betätigt. Und zwar entspricht die Schaltstellung des Schalters 28 gemäß Figur 3 der Stellung des Spiegels 13 gemäß Figur 1. Das heißt, der über die optische Achse 8 geführte Lichtstrahl durchsetzt nur die Meßküvette 9 und gelangt dann über den Spiegel 10 zum Fotoelement 11.

Die Intensität Ir ergibt einen Strom, der über den Strom-Spannung-Wandler 25 in eine dieser entsprechende Spannung Ur gewandelt wird. Auf diese Spannung wird über den geschlossenen Schalter 28 auch der Kondensator 30 aufgeladen. Diese Spannung steht auch am Ausgang des Verstärkers 31 voll an und wird der Rechenschaltung 27 zugeführt. Nachdem der Kondensator 30 den Spannungswert Ur gespeichert hat, wird der Spiegel 13 in die gestrichelte Lage gemäß Figur 1 eingeschwenkt, wodurch der über die optische Achse 8 eintretende Lichtstrahl voll auf den Spiegel 14 und von da weiter durch die Meßküvette 15 auf das Fotoelement 11 weitergeleitet wird. Bei Betätigung des Spiegels 13 wird auch der Schalter 28 geöffnet, so daß das entsprechende vom Strom-Spannung-Wandler abgegebene Signal Um unmittelbar der Rechenschaltung 27 zur Verfügung gestellt wird. Die Rechenschaltung 27 wertet nun beide Signale aus; sie ist so ausgebildet, daß am Ausgang ein Signal U abgegeben wird, das proportional dem Produkt $k \cdot \log U_m/U_r$ ist. Dieses Signal ist so ausgelegt, daß es proportional /der Konzentration der Substanz ist, welche die gemessene Farbintensität hervorruft. Dies wird durch entsprechende Programmierung der Rechenschaltung 27 erreicht.

/** der Absorption der Lösung und somit

4 Patentansprüche
3 Figuren

0014375

-1-

<u>Patentansprüche</u>

1. Zweistrahl-Wechsellicht-Kolorimeter, bestehend aus einer Beleuchtungsoptik und einem Steuerorgan, welches mit Hilfe zweier feststehender Umlenkspiegel den von einer Lichtquelle erzeugten Meßstrahl im Wechsel durch eine erste und darauffolgend durch eine zweite Meßküvette auf ein gemeinsames Fotoelement ablenkt, sowie einer mit dem Fotoelement verbundenen Meß- und Auswerteschaltung, dadurch g e k e n n z e i c h n e t , daß das Steuerorgan ein in den Strahlengang (8) des Meßstrahles einschwenkbarer Spiegel (13) ist, der den von der Lichtquelle (3) erzeugten Meßstrahl um 90°. ablenkt und daß dem Fotoelement (11) ein Strom-Spannungs-Wandler (25) nachgeschaltet ist, dessen Ausgang in Abhängigkeit von der Stellung des schwenkbaren Spiegels (12) einmal mittelbar über ein synchron mit der Schwenkbewegung des Spiegels (13) betätigbares Schaltelement (28) und einen Analogspeicher (29) und einmal unmittelbar auf die Eingänge einer Rechenschaltung (27) schaltbar ist. .

2. Zweistrahl-Wechsellicht-Kolorimeter nach Anspruch 1, dadurch g e k e n n z e i c h n e t , daß die Rechenschaltung (27) eine der Funktion k.log Um/Ur entsprechende Ausgangsspannung U liefert, wobei k eine Konstante ist und Um und Ur Spannungen bedeuten, die proportional der Intensität der beiden Meßstrahlen Ir und Im sind.

3. Zweistrahl-Wechsellicht-Kolorimeter nach Anspruch 1 und 2, dadurch g e k e n n z e i c h n e t , daß die beiden Meßküvetten (9 und 15) unterschiedliche Schichtdicke aufweisen, die von der zu messenden Flüssigkeit durchsetzt sind.

4. Zweistrahl-Wechsellicht-Kolorimeter nach Anspruch 1
und 2, dadurch  g e k e n n z e i c h n e t , daß
die beiden Meßküvetten (9, 15') gleiche Schichtdicke
aufweisen, wobei die eine Meßküvette (9) von der Objektflüssigkeit (20) und die andere Meßküvette (15') von einer
Referenzlösung (20') durchsetzt werden.

## FIG1

## FIG3

i/U Wandler    25

11

28

29
Analog-Speicher    31

Log/Div

30

Ur

27

Um

26

$$U_{Aus}=K\cdot\log\frac{U_m}{U_r}$$

FIG 2a

FIG 2b